# EUROPÄISCHE PATENTANMELDUNG

(11) **EP 2 977 395 A1**
(43) Veröffentlichungstag der Anmeldung: **27.01.2016**
(21) Anmeldenummer: 15174747.4
(22) Anmeldetag: 01.07.2015
(51) Int. Cl.: C08G 18/79, C08G 18/16, C08G 18/18, C09D 175/06, C08G 18/42

(54) **HOCHREAKTIVE, URETDIONGRUPPENHALTIGE POLYURETHANZUSAMMENSETZUNGEN, DIE CARBONATSALZE ENTHALTEN**

(30) Priorität: 21.07.2014 DE 102014214130
(71) Anmelder: Evonik Degussa GmbH, 45128 Essen (DE)
(72) Erfinder: Spyrou, Emmanouil, 46514 Schermbeck (DE); Diesveld, Andrea, 48712 Gescher (DE); Thesing, Andrea, 48683 Ahaus (DE); Loesch, Holger, 44627 Herne (DE)

(57) **Zusammenfassung**

Die Erfindung betrifft hochreaktive, Uretdiongruppen haltige Polyurethanzusammensetzungen, die bei niedrigen Einbrenntemperaturen aushärten, ein Verfahren zur Herstellung sowie deren Verwendung zur Herstellung von Beschichtungsmitteln, insbesondere Lackbeschichtungen und Klebstoffen sowie Kunststoffen. Die Zusammensetzungen sind gekennzeichnet durch eine Katalysatorkombination enthaltend ein substituiertes Carbonatsalz mit quarternären Ammoniumgegenionen und/oder quarternären Phosphoniumgegenionen, sowie einen Cokatalysator, der mindestens eine Epoxidgruppe aufweist.

## Beschreibung

Die Erfindung betrifft hochreaktive, Uretdiongruppen haltige Polyurethanzusammensetzungen, die bei niedrigen Einbrenntemperaturen aushärten, ein Verfahren zur Herstellung sowie deren Verwendung zur Herstellung von Beschichtungsmitteln, insbesondere Lackbeschichtungen und Klebstoffen sowie Kunststoffen.

Extern oder intern blockierte Polyisocyanate stellen wertvolle Vernetzer für thermisch vernetzbare Polyurethan (PUR)-Lack- und Klebstoffzusammensetzungen dar.

So beschreibt z. B. die DE-OS 27 35 497 PUR-Lacke mit hervorragender Witterungs- und Wärmestabilität. Die Vernetzer, deren Herstellung in der DE-OS 27 12 931 beschrieben wird, bestehen aus mit ε-Caprolactam blockiertem, Isocyanuratgruppen enthaltendem Isophorondiisocyanat. Es sind auch Urethan-, Biuret- oder Harnstoffgruppen haltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 30 30 539 und DE-OS 30 30 572 beschreiben Verfahren zur Herstellung von Uretdiongruppen haltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Lackbeschichtungen und damit zu mäßigen Lösemittelbeständigkeiten führen.

Hydroxylgruppen terminierte, Uretdiongruppen haltige Polyadditionsverbindungen sind Gegenstand der EP 0 669 353. Sie weisen aufgrund ihrer Funktionalität von zwei eine verbesserte Resistenz gegenüber Lösemitteln auf. Den Zusammensetzungen auf Basis dieser Uretdiongruppen haltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau. Der Einsatz von Amidinen als Katalysatoren in PUR-Lackzusammensetzung wird in der EP 0 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 0 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metallacetylacetonaten, z. B. Zinkacetylacetonat, beansprucht. Solche Katalysatoren sind tatsächlich in der Lage, die Aushärtungstemperatur von Uretdiongruppen haltigen Polyurethan-Pulverlackzusammensetzungen zu erniedrigen. (M. Gedan-Smolka, F. Lehmann, D. Lehmann "New catalysts for the low temperature curing of uretdione powder coatings" International Waterborne, High solids and Powder Coatings Symposium, New Orleans, 21 - 23. 2. 2001). Der Einsatz von Metallen in Gegenständen des täglichen Gebrauchs gerät aber aus toxikologischen Gründen immer mehr in die Kritik, vgl. die Entwicklung von Tributylzinnkatalysatoren.

In den Patentschriften WO2011124663, WO2011124664 und WO2011124665 wird die Verwendung von substituierten Carbonaten als Katalysatoren in Lacksystemen beansprucht aber weder uretdionhaltige Polyurethanhärter erwähnt noch die zusätzlich Verwendung von Epoxygruppen haltigen Cokatalysatoren.

Aufgabe der vorliegenden Erfindung war es daher hochreaktive Uretdiongruppen haltige Polyurethanzusammensetzungen zu finden, die sich bereits bei sehr niedrigen Temperaturen aushärten lassen und sich insbesondere zur Herstellung von Kunststoffen sowie von hochglänzenden oder matten, licht- und wetterstabilen hochreaktiven Beschichtungen, insbesondere für Lack- und Klebstoffzusammensetzungen, eignen. Dabei sollen aus toxikologischen und arbeitshygienischen Gründen aber keine Übergangsmetalle Verwendung finden. Außerdem müssen die Polyurethanzusammensetzungen nach Aushärtung gute lacktechnische Eigenschaften aufweisen.

Überraschend wurde gefunden, dass die erfindungsgemäßen rein organischen Katalysatoren die Rückspaltung von Uretdiongruppen so stark beschleunigen, so dass sich bei Verwendung Uretdiongruppen haltiger Komponenten die Aushärtetemperatur von Polyurethanzusammensetzungen beträchtlich erniedrigen lässt.

Herkömmliche Uretdiongruppen haltige Lack- bzw. Klebstoffzusammensetzungen lassen sich unter normalen Bedingungen (DBTL-Katalyse) erst ab 180 °C aushärten. (Pieter Gillis de Lange, Powder Coatings and Technology, Vincentz Verlag, 2004, Kap. 3.3.2.2 S. 119

Mit Hilfe der erfindungsgemäßen hochreaktiven und somit bei Niedrigtemperatur härtenden Polyurethanzusammensetzungen kann bei 100 bis 160 °C Aushärtungstemperatur nicht nur Energie und Aushärtungszeit gespart werden, sondern es lassen sich auch viele temperatursensible Substrate beschichten bzw. verkleben, die bei 180 °C unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur.

Gegenstand der vorliegenden Erfindung sind hochreaktive Uretdiongruppen haltige Polyurethanzusammensetzungen, im Wesentlichen enthaltend
A) mindestens eine Uretdiongruppen haltigen Verbindung, basierend auf aliphatischen, (cyclo)aliphatischen und/oder cycloaliphatischen Polyisocyanaten und Hydroxylgruppen haltigen Verbindungen, mit einem freien NCO-Gehalt von kleiner 5 Gew.-% und einem Uretdiongehalt von 2 bis 25 Gew.-%, in einer Menge von 5 bis 98,7 Gew.-% bezogen auf die Gesamtmasse der Komponenten;
   und
B) mindestens einen Katalysator ausgewählt aus einem substituierten Carbonatsalz mit quarternären Ammoniumgegenionen und/oder quarternären Phosphoniumgegenionen, in einer Menge von 0,2 bis 5 Gew.-% bezogen auf die Gesamtmasse der Komponenten;
C) mindestens ein Cokatalysator, der mindestens eine Epoxidgruppe aufweist in einem Gewichtsanteil, bezogen auf die Gesamtmasse der Komponenten, von 0,1 bis 10 Gew.-%;
D) mindestens ein Hydroxylgruppen haltiges Polymer mit einer OH-Zahl zwischen 20 und 1000 mg KOH/Gramm in einer Menge von 1 bis 90 Gew.-% bezogen auf die Gesamtmasse der Komponenten
wobei die Summe aller Komponenten A)-D) 100 Gew.-% beträgt.

Die hochreaktive Uretdiongruppen haltigen Polyurethanzusammensetzungen können weiter noch mindestens eine der folgenden Komponenten enthalten:
E) gegebenenfalls mindestens eine Säure in monomerer oder polymerer Form in einem Gewichtsanteil, bezogen auf die Gesamtmasse der Komponenten, von 0,1 bis 10 Gew.-%;
F) gegebenenfalls Lösemittel;
G) gegebenenfalls Hilfs- und Zusatzstoffe
wobei die Summe aller Komponenten A)-G) 100 Gew.-% beträgt.

Gegenstand der Erfindung ist auch ein Verfahren zur Herstellung der Polyurethanzusammensetzungen in beheizbaren Aggregaten bei Temperaturen unterhalb von 130 C.

Gegenstand der Erfindung ist auch die Verwendung der erfindungsgemäßen Polyurethanzusammensetzungen in Lackzusammensetzungen für Metall-, Kunststoff-, Glas-, Holz-, MDF- (Middle Density Fiber Boards) oder Ledersubstrate oder sonstigen hitzeresistenten Untergründen.

Gegenstand der Erfindung ist auch die Verwendung der erfindungsgemäßen Polyurethanzusammenstzungen in Klebstoffzusammensetzungen für Verklebungen von Metall-, Kunststoff-, Glas-, Holz-, MDF- oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, MDF-Beschichtungen, Glasbeschichtungszusammensetzungen, Lederbeschichtungszusammensetzungen und Kunststoffbeschichtungszusammensetzungen.

Gegenstand der Erfindung ist auch die Verwendung von substituierten Carbonatsalzen mit quartären Ammonium und/oder Phosphoniumgegenionen als Katalysator in Polyurethanbeschichtungszusammensetzungen, in Kombination mit Epoxiden als Säurefänger, insbesondere in Lack- und Klebstoff- oder Dichtmassenzusammensetzungen.

Hochreaktiv bedeutet im Rahmen dieser Erfindung, dass die erfindungsgemäßen Uretdiongruppen haltigen Polyurethanzusammensetzungen bei Temperaturen von 100 bis 160 °C, und zwar je nach Art des Substrats, aushärten.

Bevorzugt beträgt diese Aushärtungstemperatur 120 bis 150 °C, besonders bevorzugt von 130 bis 140 °C. Die Zeit zur Aushärtung der erfindungsgemäßen Polyurethanzusammensetzung liegt meistens innerhalb von 5 bis 30 Minuten.

Uretdiongruppen enthaltende Polyisocyanate als Ausgangsverbindungen für die Komponente A) sind wohlbekannt und werden beispielsweise in US 4 476 054, US 4 912 210, US 4 929 724 sowie EP 0 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren, wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten A) eine breite Palette von Isocyanaten geeignet.

Die erfindungsgemäß eingesetzten Di- und Polyisocyanate zur Herstellung der Uretdione A) können aus beliebigen aromatischen, aliphatischen, cycloaliphatischen und/oder (cyclo)aliphatischen Di- und/oder Polyisocyanaten bestehen. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI.

Erfindungsgemäß werden zur Herstellung der Uretdione A) bevorzugt Isophorondiisocyanat (IPDI), Hexamethylendiisocyanat (HDI), 2,2'- Dicyclohexylmethandiisocyanat, 2,4'-Dicyclohexylmethandiisocyanat, 4,4'- Dicyclohexylmethandiisocyanat (H₁₂MDI), 2-Methylpentandiisocyanat (MPDI), 2,2,4-Trimethylhexamethylendüsocyanat/2,4,4-Trimethylhexamethylendiisocyanat (TMDI), Norbornandiisocyanat (NBDI), 1,2- oder 1,3- oder 1,4-Cyclohexyldi(methylisocyanat, 1,2- oder 1,3- oder 1,4-Xylylendisocyanat, allein oder in Mischungen, eingesetzt. Ganz besonders bevorzugt werden IPDI, H₁₂MDI und/oder HDI, allein oder in Mischungen, eingesetzt.

Die Umsetzung dieser Uretdiongruppen tragenden Polyisocyanate zu Uretdiongruppen aufweisenden Verbindungen (Härter) A) beinhaltet die Reaktion der freien NCO-Gruppen mit Hydroxylgruppen haltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 0 669 353, EP 0 669 354, DE 30 30 572, EP 0 639 598 oder EP 0 803 524). Bevorzugte Uretdiongruppen aufweisende Verbindungen (Härter) A) haben einen freien NCO-Gehalt von weniger als 5 Gew.-% und einen Gehalt an Uretdiongruppen von 2 bis 25 Gew.-% (berechnet als C₂N₂O₂, Molekulargewicht 84), bevorzugt von 6 bis 25 Gew.-%. Bevorzugt als Kettenverlängerer werden Polyester und monomere Dialkohole. Außer den Uretdiongruppen können die Verbindungen (Härter) A) auch Isocyanurat-, Biuret-, Allophanat-, Urethan- und/oder Harnstoff-Strukturen aufweisen.

Bevorzugt werden Uretdiongruppen haltige Verbindungen A) auf der Basis von IPDI, H₁₂MDI und/oder HDI, allein oder in Mischungen, eingesetzt.

Die erfindungswesentlichen Katalysatoren B) sind substituierte Carbonatsalze mit quartären Ammoniumgegenionen und/oder Phosphoniumgegenionen, wie sie z. B. bereits in WO2011124663, WO2011124664, WO2011124665 beschrieben wurden.

Bevorzugte Katalysatoren B) folgen der Formel 1:

(R'₄)Y⁺⁻OC(O)OR 1

wobei Y entweder ein N-Atom oder P-Atom darstellt, R' unabhängig voneinander Alkyl, Aryl oder Aralkylgruppen sein können, und außerdem auch verbrückt oder substituiert sein können, und R entweder H oder Alkyl, Aryl oder Aralkylgruppen sein können. Diese Substanzen können beispielsweise durch Umsetzung von quartären Ammonium- oder Phosphoniumhydroxiden mit Dialkylcarbonaten oder Diarylcarbonaten oder durch die Reaktion von tertiären Aminen- bzw. Phosphinen mit Dialkylcarbonaten oder Diarylcarbonaten hergestellt werden.

Im Falle von Bicarbonaten als weitere bevorzugte Katalysatoren B) lautet die Formel 2:

(R'₄)Y^{+ -}OC(O)O⁻Y⁺(R'₄) 2

mit identischen aber unabhängigen Bedeutungen der beiden R' wie oben. Diese Bicarbonate können beispielsweise durch Umsetzung von quartären Ammonium- oder Phosphoniumhydroxiden mit Kohlendioxid hergestellt werden.

Bevorzugte Beispiele für solche Katalysatoren B) der Formel 1 oder 2 sind Tetramethylammoniummethylcarbonat, Tetraethylammoniummethylcarbonat, Tetrapropylammoniummethylcarbonat, Tetrabutylammoniummethylcarbonat, Benzyltrimethylammoniummethylcarbonat, Benzyltriethylammoniummethylcarbonat, Tetramethylphosphoniummethylcarbonat, Tetraethylphosphoniummethylcarbonat, Tetrapropylphosphoniummethylcarbonat, Tetrabutylphosphoniummethylcarbonat, Benzyltrimethylphosphoniummethylcarbonat, Benzyltriethylphosphoniummethylcarbonat, Tetramethylammoniumethylcarbonat, Tetraethylammoniumethylcarbonat, Tetrapropylammoniumethylcarbonat, Tetrabutylammoniumethylcarbonat, Benzyltrimethylammoniumethylcarbonat, Benzyltriethylammoniumethylcarbonat, Tetramethylphosphoniumethylcarbonat, Tetraethylphosphoniumethylcarbonat, Tetrapropylphosphoniumethylcarbonat, Tetrabutylphosphoniumethylcarbonat, Benzyltrimethylphosphoniumethylcarbonat, Benzyltriethylphosphoniumethylcarbonat, Tetrabutylammoniumbicarbonat, Tetrahexylammoniumbicarbonat, Benzyltriethylammoniumbicarbonat. Selbstverständlich können auch Mischungen solcher Katalysatoren verwendet werden.

Die Katalysatoren sind in einer Menge von 0,2 bis 5 Gew.-%, bevorzugt 0,4 bis 3 Gew.-%, bezogen auf die Gesamtmasse der Komponenten, in der Polyurethanzusammensetzung enthalten. Die Katalysatoren können Kristallwasser enthalten, wobei dieses bei der Berechnung der eingesetzten Katalysatorenmenge nicht berücksichtigt wird, d. h. die Wassermenge wird herausgerechnet. Besonders bevorzugt werden Tetraethylammoniummethylcarbonat und/oder Tetrabutylammoniummethylcarbonat eingesetzt.

Eine erfindungsgemäße Variante schließt die polymere Anbindung solcher Katalysatoren B) an die Verbindungen (Härter) A) oder an die Hydroxylgruppen haltigen Polymere C) mit ein. So können z. B. freie Alkohol-, Thio- oder Aminogruppen der Ammoniumsalze mit Säure-, Isocyanat-, oder Glycidylgruppen der Verbindungen (Härter) A) oder Hydroxylgruppen haltige Polymere C) umgesetzt werden, um die Katalysatoren B) in den polymeren Verbund zu integrieren. Außerdem können diese Katalysatoren mit einer inerten Hülle umgeben und damit verkapselt sein.

Epoxidgruppen aufweisende Verbindungen C) sind in der Lackchemie allgemein bekannt.

In Frage kommen dabei bevorzugt Triglycidyletherisocyanurat (TGIC), EPIKOTE^{®} 828 (Diglycidylether auf Basis Bisphenol A, Shell), Versaticsäureglycidylester, Terephthalsäurediglycidylether, Trimellitsäuretriglycidylether, Ethylhexylglycidylether, Butylglycidylether, Polypox R 16 (Pentaerythrittetraglycidylether, UPPC AG) sowie andere Polypoxtypen mit freien Epoxygruppen. Selbstverständlich kommen auch Mischungen solcher Substanzen in Frage. Besonders bevorzugt werden Terephthalsäurediglycidylether und Trimellitsäuretriglycidylether. Diese reaktiven Verbindungen können in Gewichtsanteilen von 0,1 bis 10 Gew.-%, bevorzugt von 0,5 bis 3 Gew.-%, bezogen auf die Gesamtmasse der Komponenten, eingesetzt werden.

Bei den Hydroxylgruppen haltigen Polymeren D) werden bevorzugt Polyester, Polyether, Polyacrylate, Polyurethane, Polyamidamine, Polyether und/oder Polycarbonate mit einer OH-Zahl von 20 bis 1000 (in mg KOH/Gramm) eingesetzt. Solche Bindemittel sind beispielsweise in EP 0 669 354 und EP 0 254 152 beschrieben worden. Solche Polymere können amorph, kristallin oder teilkristallin sein. Selbstverständlich können auch Mischungen solcher Polymere eingesetzt werden. Diese sind in einer Menge von 1 bis 90 Gew.-% bezogen auf die Gesamtmasse der Komponenten, enthalten, bevorzugt 20-80 Gew.-%.

Besonders bevorzugt werden Polyester mit einer OH-Zahl von 30 bis 150, einem mittleren Molekulargewicht von 500 bis 6 000 g/mol und einer Säurezahl von 3 bis 10 mg KOH/g.

Säuren, die unter E) genannt werden, sind alle Stoffe, fest oder flüssig, organisch oder anorganisch, monomer oder polymer, die die Eigenschaften einer Brönstedt- oder einer Lewissäure besitzen. Als Beispiele seien genannt: Schwefelsäure, Essigsäure, Benzoesäure, Malonsäure, Terephthalsäure, aber auch Copolyester oder Copolyamide mit einer Säurezahl von mindestens 20 mg KOH/g. Diese sind in einer Menge von von 0,1 bis 10 Gew.-% bezogen auf die Gesamtmasse der Komponenten, falls verwendet enthalten, bevorzugt von 0,2 bis 1 Gew.-%. Als Lösemittel unter F) kommen alle flüssigen Substanzen in Frage, die nicht mit anderen Inhaltstoffen reagieren, z. B. Aceton, Ethylacetat, Butylacetat, Xylol, Solvesso 100, Solvesso 150, Methoxypropylacetat und Dibasicester.

Erfindungsgemäß können die in der Lack- bzw. Klebstofftechnologie üblichen Zusatzstoffe G), wie Verlaufsmittel, z. B. Polysilicone oder Acrylate, Lichtschutzmittel, z. B. sterisch gehinderte Amine, oder andere Hilfsmittel, wie sie z. B. in EP 0 669 353 beschrieben wurden, in einer Gesamtmenge von 0,05 bis 5 Gew.-% zugesetzt werden. Füllstoffe und Pigmente wie z. B. Titandioxid können in einer Menge bis zu 50 Gew.-% der Gesamtzusammensetzung zugesetzt werden.

Die Homogenisierung aller Bestandteile zur Herstellung der erfindungsgemäßen Polyurethanzusammensetzung kann in geeigneten Aggregaten, wie z. B. beheizbaren Rührkesseln, Knetern oder auch Extrudern, erfolgen, wobei Temperaturobergrenzen von 120 bis 130 °C nicht überschritten werden sollten. Die gut vermischte Masse wird durch geeignete Auftragung, z. B. Walzen, Sprühen, Spritzen, Tauchen, Rakeln, auf das Substrat aufgebracht. Nach dem Auftrag werden die beschichteten Werkstücke zur Aushärtung 4 bis 60 Minuten auf eine Temperatur von 60 bis 220 °C, vorzugsweise 6 bis 30 Minuten bei 80 bis 160 °C erhitzt.

Nachfolgend wird der Gegenstand der Erfindung anhand von Beispielen näher erläutert.

### Beispiele:

### Einsatzstoffe

| **Einsatzstoffe** | **Produktbeschreibung, Hersteller** |
|---|---|
| VESTAGON BF 1320 | Komponente A), Evonik Degussa GmbH, Coatings & Colorants, auf Basis von IPDI, Uretdion-Gehalt: 13,2 Gew.-%, T_{G}: 74 - 75 °C |
| TEAOH | Tetraethylammoniumhydroxid, Aldrich |
| ARALDIT PT912 | Komponente C), Epoxykomponente, Huntsman (Mischung aus Terephthalsäurediglycidylether und Trimellitsäuretriglycidylether) |
| URALAC P1580 | Komponente D), Polyester, OHZ 81 mg KOH/g, Tg 54 °C, Arkema |
| DMC | Dimethylcarbonat, Aldrich |
| Butylacetat | Aldrich |

| | |
|---|---|
| Schmp.: Schmelzpunkt; T_{G}: Glasübergangspunkt; OHZ: OH-Zahl, | |

### 2. Herstellung des Katalysators Tetraethylammoniummethylcarbonat (TEAMC) nach WO2011124663

58,8 g einer 25 Gew.-%-ige TEAOH Lösung in Methanol wurden mit 38,8 g Dimethylcarbonat gemischt und einen Tag stehen gelassen. Dann wurde das überschüssige Methanol bei 230 mbar und RT am Rotationsverdampfer abgezogen, so dass eine 70 Gew.-%-ige Katalysatorlösung in Dimethylcarbonat entstand. Die vollständige Umsetzung wurde mit Hilfe einer Titration (HCl gegen Methylenblau) sowie durch 13C-NMR überprüft.

### 3. Lacksysteme

**(Angaben in Gew.-%):**

| **Beispiele** | **VESTAGON BF 1320** | **URALAC P 1580** | **TEAMC** | **PT 912** | **Butylacetat** |
|---|---|---|---|---|---|
| 1* | 15,7 | 34,3 | | | 50,0 |
| 2* | 15,5 | 34,0 | 0,5 | | |
| 3 | 15,3 | 33,5 | 0,5 | 0,7 | 50,0 |

| | | | | | |
|---|---|---|---|---|---|
| * nicht erfindungsgemäße Vergleichsbeispiele | | | | | |

Vestagon BF 1320, URALAC P 1580 und eventuell Katalysatoren wurden 50 Gew.-%-ig in Butylacetat gelöst und mit einem 50 µm Rakel auf ein Stahlblech aufgerakelt. Danach wurde 10 min bei 150 °C eingebrannt.

| **Beispiele** | **Kugelschlag dir/rev [inch* lbs]** | **Erichsen-Tiefung [mm]** | **Bemerkung** |
|---|---|---|---|
| 1* | <10/<10 | 0,5 | nicht ausgehärtet |
| 2* | 10/<10 | 0,5 | nicht ausgehärtet |
| 3 | 80/80 | > 10 | ausgehärtet |

| | | | |
|---|---|---|---|
| * nicht erfindungsgemäße Vergleichsbeispiele | | | |

Beispiel 3 ist vollständig ausgehärtet und weist gute lacktechnische Mechaniken auf. Die Vergleichsbeispiele 1* und 2* sind gar nicht ausgehärtet.

Kugelschlag nach ASTM D 2794 93, Erichsen-Tiefung nach DIN 53 156

## Patentansprüche

1. Hochreaktive Uretdiongruppen haltige Polyurethanzusammensetzungen, im Wesentlichen enthaltend
A) mindestens eine Uretdiongruppen haltigen Verbindung, basierend auf aliphatischen, (cyclo)aliphatischen und/oder cycloaliphatischen Polyisocyanaten und Hydroxylgruppen haltigen Verbindungen, mit einem freien NCO-Gehalt von kleiner 5 Gew.-% und einem Uretdiongehalt von 2 bis 25 Gew.-%, in einer Menge von 5 bis 98,7 Gew.-% bezogen auf die Gesamtmasse der Komponenten;
und
B) mindestens einen Katalysator ausgewählt aus einem substituierten Carbonatsalz mit quarternären Ammoniumgegenionen und/oder quarternären Phosphoniumgegenionen, in einer Menge von 0,2 bis 5 Gew.-% bezogen auf die Gesamtmasse der Komponenten;
und
C) mindestens ein Cokatalysator, der mindestens eine Epoxidgruppe aufweist, in einem Gewichtsanteil, bezogen auf die Gesamtmasse der Komponenten, von 0,1 bis 10 Gew.-%;
und
D) mindestens ein Hydroxylgruppen haltiges Polymer mit einer OH-Zahl zwischen 20 und 1000 mg KOH/Gramm in einer Menge von 1 bis 90 Gew.-% bezogen auf die Gesamtmasse der Komponenten;
wobei die Summe aller Komponenten A)-D) 100 Gew.-% beträgt.

2. Hochreaktive Uretdiongruppen haltige Polyurethanzusammensetzungen nach Anspruch 1, wobei mindestens eine der folgenden Komponenten E) - G) enthalten ist:
E) mindestens eine Säure in monomerer oder polymerer Form in einem Gewichtsanteil, bezogen auf die Gesamtmasse der Komponenten, von 0,1 bis 10 Gew.-%;
F) Lösemittel;
G) Hilfs- und Zusatzstoffe,
wobei die Summe aller Komponenten A)-G) 100 Gew.-% beträgt.

3. Hochreaktive Uretdiongruppen haltige Polyurethanzusammensetzungen nach mindestens einem der vorherigen Ansprüche, **dadurch gekennzeichnet, dass** mindestens eine Uretdiongruppen haltige Verbindung A), auf der Basis von Isophorondiisocyanat (IPDI), Hexamethylendiisocyanat (HDI), 2,2'- Dicyclohexylmethandiisocyanat, 2,4'-Dicyclohexylmethandiisocyanat, 4,4'- Dicyclohexylmethandiisocyanat (H₁₂MDI), 2-Methylpentadiisocyanat (MPDI), 2,2,4-Trimethylhexamethylendüsocyanat/2,4,4-Trimethylhexamethylendiisocyanat (TMDI), Norbornandiisocyanat (NBDI), 1,2- oder 1,3- oder 1,4-Cyclohexyldi(methylisocyanat), 1,2- oder 1,3- oder 1,4-Xylylendisocyanat, allein oder in Mischungen, enthalten ist.

4. Hochreaktive Uretdiongruppen haltige Polyurethanzusammensetzungen nach mindestens einem der vorherigen Ansprüche, **dadurch gekennzeichnet, dass** Uretdiongruppen enthaltende Verbindungen A) auf Basis von IPDI, H₁₂MDI und/oder HDI, allein oder in Mischungen, enthalten sind.

5. Hochreaktive Uretdiongruppen haltige Polyurethanzusammensetzungen nach mindestens einem der vorherigen Ansprüche, **dadurch gekennzeichnet, dass** Katalysatoren B) der Formel 1 enthalten sind:
(R'₄)Y^{+ -}OC(O)OR 1
wobei Y entweder ein N-Atom oder P-Atom darstellt, und R' unabhängig voneinander Alkyl, Aryl oder Aralkylgruppen sein können, und außerdem auch verbrückt oder substituiert sein können, und R entweder H oder Alkyl, Aryl oder Aralkylgruppen sein können.

6. Hochreaktive Uretdiongruppen haltige Polyurethanzusammensetzungen nach mindestens einem der vorherigen Ansprüche, **dadurch gekennzeichnet, dass** Katalysatoren B) der Formel 2 enthalten sind:
(R'₄)Y^{+ -}OC(O)O⁻Y⁺(R'₄) 2
wobei Y entweder ein N-Atom oder P-Atom darstellt, und R' unabhängig voneinander Alkyl, Aryl oder Aralkylgruppen sein können, und außerdem auch verbrückt oder substituiert sein können, und R entweder H oder Alkyl, Aryl oder Aralkylgruppen sein können.

7. Hochreaktive Uretdiongruppen haltige Polyurethanzusammensetzungen nach mindestens einem der vorherigen Ansprüche, **dadurch gekennzeichnet, dass** Katalysatoren B) der Formel 1 oder 2 ausgewählt aus Tetramethylammoniummethylcarbonat, Tetraethylammoniummethylcarbonat, Tetrapropylammoniummethylcarbonat, Tetrabutylammoniummethylcarbonat, Benzyltrimethylammoniummethylcarbonat, Benzyltriethylammoniummethylcarbonat, Tetramethylphosphoniummethylcarbonat, Tetraethylphosphoniummethylcarbonat, Tetrapropylphosphoniummethylcarbonat, Tetrabutylphosphoniummethylcarbonat, Benzyltrimethylphosphoniummethylcarbonat, Benzyltriethylphosphoniummethylcarbonat, Tetramethylammoniumethylcarbonat, Tetraethylammoniumethylcarbonat, Tetrapropylammoniumethylcarbonat, Tetrabutylammoniumethylcarbonat, Benzyltrimethylammoniumethylcarbonat, Benzyltriethylammoniumethylcarbonat, Tetramethylphosphoniumethylcarbonat, Tetraethylphosphoniumethylcarbonat, Tetrapropylphosphoniumethylcarbonat, Tetrabutylphosphoniumethylcarbonat, Benzyltrimethylphosphoniumethylcarbonat, Benzyltriethylphosphoniumethylcarbonat, sowie Tetrabutylammoniumbicarbonat, Tetrahexylammoniumbicarbonat, Benzyltriethylammoniumbicarbonat, allein oder in Mischungen, enthalten sind.

8. Hochreaktive Uretdiongruppen haltige Polyurethanzusammensetzungen nach mindestens einem der vorherigen Ansprüche, **dadurch gekennzeichnet, dass** Cokatalysatoren C) enthalten sind, ausgewählt aus der Gruppe umfassend Triglycidyletherisocyanurat, Diglycidylether auf Basis Bisphenol A, Versaticsäureglycidylester, Terephthalsäurediglycidylether, Trimellitsäuretriglycidylether, Ethylhexylglycidylether, Butylglycidylether, Pentaerythrittetraglycidylether, sowie Polypoxtypen mit freien Epoxygruppen, allein oder in Mischungen.

9. Hochreaktive Uretdiongruppen haltige Polyurethanzusammensetzungen nach mindestens einem der vorherigen Ansprüche, **dadurch gekennzeichnet, dass** als Hydroxylgruppen haltige Polymere D) Polyester, Polyether, Polyacrylate, Polyurethane, Polyamidamine, Polyether und/oder Polycarbonate mit einer OH-Zahl von 20 bis 1000 mg KOH/Gramm, allein oder in Mischungen, enthalten sind.

10. Hochreaktive Uretdiongruppen haltige Polyurethanzusammensetzungen nach mindestens einem der vorherigen Ansprüche, **dadurch gekennzeichnet, dass** als Hydroxylgruppen haltige Polymere D) Polyester mit einer OH-Zahl von 30 bis 150 mg KOH/g, einem mittleren Molekulargewicht von 500 bis 6 000 g/mol und einer Säurezahl von 3 bis 10 mg KOH/g, enthalten sind.

11. Hochreaktive Uretdiongruppen haltige Polyurethanzusammensetzungen nach mindestens einem der vorherigen Ansprüche, **dadurch gekennzeichnet, dass** als Säure E) Schwefelsäure, Essigsäure, Benzoesäure, Malonsäure, Terephthalsäure, Copolyester und/oder Copolyamide mit einer Säurezahl von mindestens 20 mg KOH/g, enthalten sind, allein oder in Mischungen.

12. Verfahren zur Herstellung der Polyurethanzusammensetzungen gemäß den Ansprüchen 1-11 im Wesentlichen enthaltend
A) mindestens eine Uretdiongruppen haltigen Verbindung, basierend auf aliphatischen, (cyclo)aliphatischen und/oder cycloaliphatischen Polyisocyanaten und Hydroxylgruppen haltigen Verbindungen, mit einem freien NCO-Gehalt von kleiner 5 Gew.-% und einem Uretdiongehalt von 2 bis 25 Gew.-%, in einer Menge von 5 bis 98,7 Gew.-% bezogen auf die Gesamtmasse der Komponenten;
und
B) mindestens einen Katalysator ausgewählt aus einem substituierten Carbonatsalz mit quarternären Ammoniumgegenionen und/oder quarternären Phosphoniumgegenionen, in einer Menge von 0,2 bis 5 Gew.-% bezogen auf die Gesamtmasse der Komponenten;
und
C) mindestens ein Cokatalysator, der mindestens eine Epoxidgruppe aufweist, in einem Gewichtsanteil, bezogen auf die Gesamtmasse der Komponenten, von 0,1 bis 10 Gew.-%;
und
D) mindestens ein Hydroxylgruppen haltiges Polymer mit einer OH-Zahl zwischen 20 und 1000 mg KOH/Gramm in einer Menge von 1 bis 90 Gew.-% bezogen auf die Gesamtmasse der Komponenten,
wobei die Summe aller Komponenten A)-D) 100 Gew.-% beträgt,
in beheizbaren Aggregaten bei Temperaturen unterhalb von 130 °C.

13. Verwendung der Polyurethanzusammensetzungen gemäß den Ansprüchen 1-11 in Lackzusammensetzungen für Metall-, Kunststoff-, Glas-, Holz-, MDF- oder Ledersubstrate oder sonstigen hitzeresistenten Untergründen.

14. Verwendung der Polyurethanzusammenstzungen gemäß den Ansprüchen 1-11 in Klebstoffzusammensetzungen für Verklebungen von Metall-, Kunststoff-, Glas-, Holz-, MDF- oder Ledersubstraten oder sonstigen hitzeresistenten Untergründen.

15. Metallbeschichtungszusammensetzungen, Holzbeschichtungszusammensetzungen, MDF-Beschichtungen, Glasbeschichtungszusammensetzungen, Lederbeschichtungszusammensetzungen oder Kunststoffbeschichtungszusammensetzungen, die Polyurethanzusammensetzungen gemäß den Ansprüchen 1-11 enthalten.

16. Verwendung von substituierten Carbonatsalzen mit quartären Ammonium- und/oder Phosphoniumgegenionen als Katalysator in Polyurethanbeschichtungszusammensetzungen, in Kombination mit Epoxiden.

17. Verwendung von substituierten Carbonatsalzen mit quartären Ammonium- und/oder Phosphoniumgegenionen als Katalysator nach Anspruch 16, in Lackzusammensetzungen, Klebstoffzusammensetzungen oder Dichtmassenzusammensetzungen.
